# EUROPÄISCHE PATENTSCHRIFT

(11) **EP 1 152 832 B1**
(45) Veröffentlichungstag und Bekanntmachung des Hinweises auf die Patenterteilung: **02.05.2003**
(21) Anmeldenummer: 00910535.4
(22) Anmeldetag: 18.02.2000
(51) Int. Cl.: B01L 3/02, B01J 19/00

(54) **SENSOR MIT MESSFELD ZUR FUNKTIONSKONTROLLE EINER MIKROPIPETTE**
SENSOR WITH MEASURING FIELD FOR CONTROLLING FUNCTIONING OF A MICROPIPETTE
CHAMP DE MESURE DE DETECTEUR DESTINE AU CONTROLE DU BON FONCTIONNEMENT D'UNE MICROPIPETTE

(30) Priorität: 19.02.1999 DE 19906966
(43) Veröffentlichungstag der Anmeldung: 14.11.2001
(73) Patentinhaber: Gesim Gesellschaft für Silizium-Mikrosysteme mbH, 01474 Rossendorf (DE)
(72) Erfinder: HOWITZ, Steffen, D-011159 Dresden (DE); BÜRGER, Mario, D-01796 Pirna (DE)
(74) Vertreter: Hudler, Frank, Dipl.-Ing.
(86) Internationale Anmeldenummer: DE0000455
(87) Internationale Veröffentlichungsnummer: WO00048736

(56) Entgegenhaltungen:
- WO-A-93/22678
- WO-A-97/25531
- DE-A- 19 754 459
- US-A- 5 000 817
- US-A- 5 486 337

## Beschreibung

Die Erfindung betrifft einen Sensor zur Funktionskontrolle einer Mikropipette eines Nanoplotters, d.h. zur Kontrolle der Tropfenabgabe der Mikropipette und/oder zur Bestimmung der exakten örtlichen Tropfenablage und/oder dessen Lageabweichungen vom vorgesehenen Ablageort und/oder zur Messung des Ausmaßes eines Tropfens.

Das Hauptanwendungsgebiet des Nanoplotters ist auf dem Gebiet der DNA-Analytik, der Molekularbiologie oder auch der Proteinsynthese zu sehen.

Mit Hilfe eines Nanoplotters werden auf einer Ablageplatte, oder einer auf dieser positionierten Papierbahn o.dgl. eine Vielzahl von Tropfen regelmäßig verteilt, d.h. in Form eines vorher definierten Arrays, abgelegt. zu diesem zweck ist der Nanoplotter mit einer Mikropipette ausgerüstet, die mittels einer Traversiereinrichtung in x- und y-Richtung beliebig über der Ablageplatte in eine Ablageposition positioniert werden kann. Die Mikropipette kann mit Hilfe der x-y-Robotik des Nanoplotters jederzeit über jedem Punkt der Ablageplatte rechnergesteuert positioniert werden. Die Mikropipette dient zum Aufnehmen einer geringen Menge einer beliebigen Flüssigkeit aus einem Vorratsbehälter und der anschließenden Ablage eines oder mehrerer Mikrotropfen am vorgesehenen Ablageort. Zu diesem Zweck ist die Mikropipette mit einer piezoelektrisch angetriebenen Mikropumpe ausgestattet. Die Größe. der abgelegten Mikrotropfen liegt in nl- bzw. pl-Bereich.

Wird der Nanoplotter beispielsweise für gentechnische Untersuchungen, z.B. DNA-Analysen, oder andere biologische Untersuchungen verwendet, so muß sichergestellt sein, dass jeder. Tropfen auch an der vorgesehenen Ablagestelle abgelegt worden ist also dass ein 100% exaktes Tropfenarray erzeugt worden ist.

Mit den bisher bekannt gewordenen Nanoplottern läßt sich diese Forderung nicht Vollständig erfüllen, da es unvermeidbar ist, dass gelegentlich ein vorgesehenes Tropfenereignis nicht arrangiert wird. Das kann an einer zufälligen Verschmutzung der Mikropipette, an Gasblasen in der Mikropipette, oder auch daran liegen, dass die Beladung der Mikropipette mit einer Flüssigkeit nicht oder nicht vollständig erfolgte.

Um dieses Problem zu umgehen, könnte eine hochauflösende Flußmessung vorgesehen werden, die jedoch abgesehen vom erheblichen meßtechnischen Aufwand keine Sicherheit bietet, ob im Ergebnis der Flüssigkeitsbewegung tatsächlich ein Tropfen in vorgesehenen Zielgebiet angekommen ist.

Aus der EP 0 170 593 A1 ist ein Feuchtigkeitssensor bekannt geworden, mit dem die Benetzungsdichte einer polaren Flüssigkeit ermittelt werden soll. Zu diesem Zweck sind auf der der Flüssigkeit abgewandten Seite eines Trägers, oder innerhalb des Trägers einen Kondensator bildende Leiterbahnen mit Anschlüssen für eine Messeinrichtung zur Kapazitätsbestimmung vorgesehen. Es erfolgt hier eine rein kapazitive Bestimmung der Benetzungsdichte, z.B. auf einer Windschutzscheibe. Die Ermittlung einzelner Tropfen mit einer Flüssigkeitsmenge in Nanoliter- oder Pikoliterbereich ist mit einem derartigen Feuchtigkeitssensor nicht möglich.

Die BE-1008802A6 beschreibt einen Regendetektor mit einem Sensor aus einer spiralförmigen Leiterbahn, die mit einer elektrischen Steuereinheit verbunden ist. Beim Auftreffen von Regentropfen auf den Detektor löst die Steuereinheit einen akustischen Alarm aus. Ein derartiger Detektor ist ebenfalls nicht für die Detektion von Tropfen mit einer Flüssigkeitsmenge im Nanoliter- bzw. Pikoliterbereich geeignet.

Schliesslich wird in der US-A-5.486.337 eine Einrichtung zum elektrostatischen Manipulieren von sehr kleinen Tropfen beschrieben. Zu diesem Zweck ist ein nicht benetzbares Substrat vorgesehen, auf dem benetzbare Elektroden angeordnet sind. Diese Elektroden sind mit einer elektrischen Steuereinrichtung zur Erzeugung elektrostatischer Kräfte zwischen den Elektroden und einem Tropfen verbunden. Durch die Einwirkung der elektrostatischen Kräfte können die Tropfen zu einer ausgewählten Elektrode oder von einer Elektrode zu einer anderen Elektrode bewegt werden. Mit dieser Einrichtung ist es allerdings nicht möglich, einzelne Tropfen zu detektieren.

Die der Erfindung zugrundeliegende Aufgabenstellung besteht darin, einen Sensor zu schaffen, mit dem es möglich ist, die Abgabe eines Tropfens zu detektieren, also eine Funktionskontrolle der Mikropipette zu realisieren.

Die der Erfindung zugrundeliegende Aufgabe wird bei einem Sensor der eingangs genannten Art dadurch gelöst, dass Elektroden vorgesehen sind, die zur Aufnahme von mit der Mikropipette abgelegten oder abgeworfenen Testtropfen, wenigstens ein Messfeld bildend, auf einer Trägerstruktur angeordnet sind, dass die Elektroden in einem regelmäßigen Raster punkt-, linien- oder flächenförmig gestaltet und flächenmäßig elektrisch isoliert zueinander angeordnet sind, dass die Elektroden auf wenigstens einem Meßfeld zur Auswertung des vom Testtropfen ausgelösten elektrischen Signales mit einer Auswerteelektronik verbunden sind.

In einer ersten Ausgestaltung der Erfindung weist das Meßfeld eine flächig angeordnete doppelte ineinandergeschobene Kammstruktur aus gegeneinander isolierten Metallleitbahnen auf einer Trägerstruktur auf, die jeweils mit der Auswerteelektronik verbunden sind.

In einer zweiten Ausgestaltung der Erfindung sind als Meßfeld konzentrisch zueinander angeordnete Ringelektroden auf einer Trägerstruktur vorgesehen, die jeweils voneinander elektrisch isoliert angeordnet und mit der Auswerteelektronik verbunden sind.

Eine dritte Ausgestaltung der Erfindung sieht als Meßfeld eine regelmäßig ausgebildete Punktmatrix einzelner Elektroden auf einer Trägerstruktur vor, wobei die Elektrioden einzeln oder in Gruppen mit der Auswerteelektronik verbunden sind.

Zur Bestimmung des x-y-Offsets eines auf dem Meßfeld abgelegten Tropfens weist das Meßfeld eine Matrix von linienförmigen Elektroden in einer Vielzahl von zeilen und Spalten auf, wobei die Elektroden der Matrix an ihren Kreuzungspunkten elektrisch voneinander isoliert sind und jeweils mit der Auswertechaltung elektrisch verbunden sind. Bevorzugt weisen die Elektroden in den Kreuzungspunkten einen geringen, Abstand zueinander auf.

Um im Zentrum des Meßfeldes eine besonders gute Ortsauflösung zu erreichen, weist die Matrix der Elektroden einen Ortsgradienten auf, d.h. der Abstand der Kreuzungspunkte wird von innen nach außen größer, wobei der Abstand der Kreuzungspunkte im zentralen Bereich des Meßfeldes über einen vorgegebenen Bereich konstant klein ist.

In einer weiteren Ausgestaltung der Erfindung besteht das Meßfeld aus konzentrisch angeordneten unterbrochenen oder durchgehenden Elektrodenringen aus einem elektrisch leitfähigen Material. Je nach der Zusammensetzung der zu plottenden Flüssigkeit bestehen die Elektroden im Meßfeld aus einem Edelmetall oder aus einem zumindest auf der Oberfläche leitfähigen Kunststoff.

Auch können die Elektroden auf eine planare oder gekrümmte bzw. gewölbte Oberfläche der Trägerstruktur aufgebracht sein.

In einer bevorzugten Ausführungsform bildet die planare Oberfläche eines Nichtleiters, z.B. einer Glasplatte, einer Siliziumplatte oder eines Kunststoffes die Basis als Trägerstruktur für die Elektrodenanordnung.

Die Herstellung des erfindungsgemäßen Sensors kann mittels der bekannten Mikro-Lithografie und Schichttechnik kostengünstig erfolgen.

Vorzugsweise erfolgt die Isolation der Elektroden voneinander durch gestandene Isolatoren, wobei die Kreuzungspunkte mit Hilfe der üblicher Ätzverfahren, wie Trockenätzverfahren oder mit Hilfe eines Lasers geöffnet sind.

In einer weiteren Fortführung der Erfindung sind die Elektroden heizbar ausgeführt.

In einer weiteren besonderen Variante der Erfindung sind zwei in definiertem Abstand nebeneinander angeordnete Meßfelder vorgesehen, die jeweils parallel zueinander ausgerichtete langgestreckte Elektroden aufweisen, wobei die Elektroden eines Meßfeldes eine andere Ausrichtung aufweisen, als die Elektroden des jeweils anderen Meßfeldes. Vorzugsweise sind die dabei die Elektroden auf einem Meßfeld zur Messung der x-Position bzw. Abweichung senkrecht und auf dem anderen Meßfeld zur Messung der Y-Position bzw. Abweichung waagerecht ausgerichtet. Damit läßt sich der x- und der y-Offset des abgeworfenen Tropfens besonders exakt bestimmen.

Die Erfindung soll nachfolgend an Ausführungsbeispielen näher erläutert werden. In den zugehörigen Zeichnungen zeigen:
- Fig. 1: einen Sensor mit einem Meßfeld mit kammartiger Elektrodenanordnung;
- Fig. 2: einen Sensor mit einem Meßfeld mit einer konzentrischen Elektrodenanordnung;
- Fig. 3: einen Sensor mit einem Meßfeld mit Punktelektroden;
- Fig. 4: einen Sensor mit einem Meßfeld mit einer Elektrodenmatrix aus sich kreuzenden linienförmigen Elektroden;
- Fig. 5: einen Sensor mit zwei im Abstand zueinander angeordneten Meßfeldern; und
- Fig. 6: einen Sensor mit einem segmentierten Meßfeld mit konzentrisch verlaufenden unterbrochenen Elektroden.

Eine erfindungsgemäße Funktionskontrolle einer Mikropipette eines Nanoplotters kann auf verschiedenem wege realisiert werden. So ist die Verwendung von auf einer Trägerstruktur 2 punkt-, linien oder andersförmig gestalteten Elektroden 1 als Funktionstestsensor die flächenmäßig elektrisch isoliert zueinander angeordnet sind, möglich.

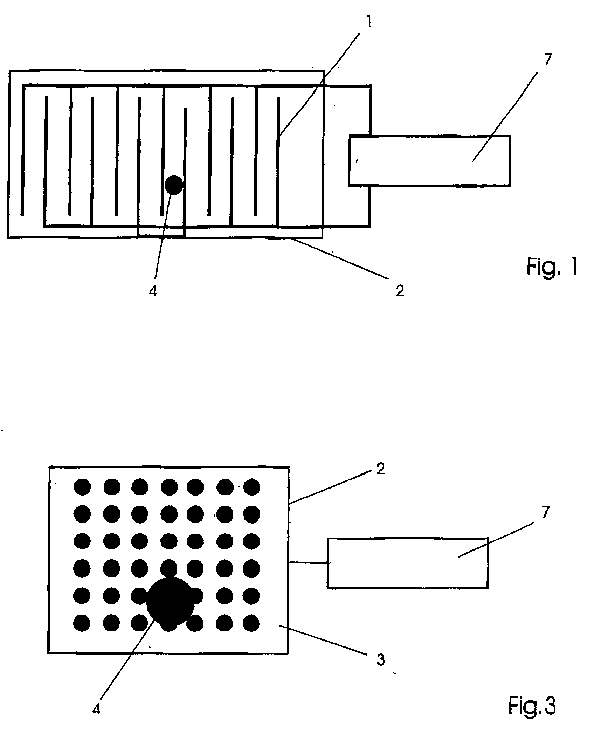

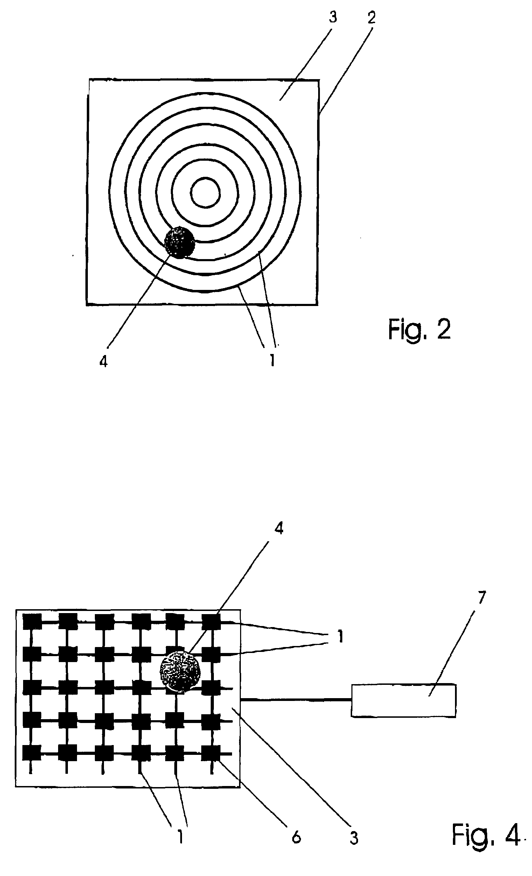

Derartige Elektroden 1, die auf der Trägerstruktur 2 ein Meßfeld 3 bilden, angeordnet sind, können beispielsweise eine doppelte Kammstruktur (Fig. 1), oder auch die Form von konzentrischen Ringelektroden (Fig. 2) aufweisen. Eine andere Möglichkeit besteht darin, die Elektroden als Punktmatrix (Fig. 3) aufzubauen. Die Elektroden selbst können aus beliebigen elektrisch leitfähigen Materialien hergestellt werden. Welches Material im Einzelfall für die Elektroden verwendet wird, hängt in erster Linie von der Zusammensetzung der zu plottenden Flüssigkeit ab.

Trifft ein Testtropfen 4 auf die Elektrodenanordnung, oder passiert diese, so kann anhand der Änderung der elektrischen Parameter eine elektronische Auswertung des Ereignisses vorgenommen werden. Die Auswertung kann mit Hilfe von kapazitiven, amperometrischen, konduktometrischen oder potentiometrischen Meßprinzipien erfolgen, mit denen durch eine Auswerteelektronik auswertbare Signale erzeugt werden können. Es ist auch möglich, elektrisch geladene Testtropfen 4 einzusetzen, so dass der vom Tropfen 4 ausgelöste elektrische Impuls ausgewertet werden kann. In diesem Fall genügt sogar nur eine Elektrode, z.B. eine einzelne Punktelektrode.

Eine besondere Weiterentwicklung des Sensors besteht darin, diesen neben dem Funktionstest auch als Positonssensor einzusetzen, indem das Meßfeld 3 eine ausgedehntere flächenmäßige Ausbildung, erhält. Die Elektroden 1 sind in diesem Fall flächenmäßig mit konstanten oder variablen Abständen zueinander angeordnet und ermöglichen somit eine örtliche Bestimmung aufgetroffener Tropfen (Fig. 2, 3, 7). Um dies realisieren zu können, muß natürlich die exakte Position der Pipette über dem Meßfeld bekannt sein. Diese Information liefert die x-y-Robotik des Mikroplotters.

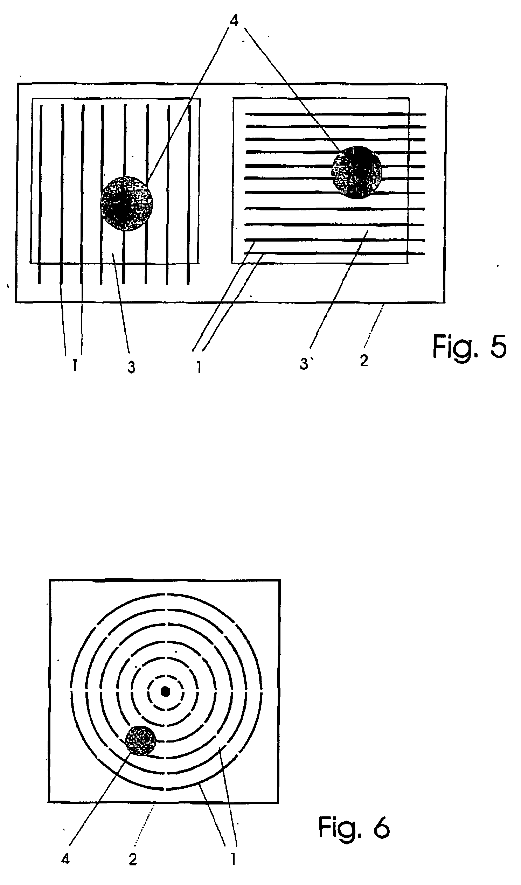

Hierzu kann eine Elektrodenmatrix aus einer Vielzahl von Zeilen und Spalten aufgebaut werden (Fig. 5), wobei die Elektroden an ihren Kreuzungspunkten 6 elektrisch voneinander isoliert sind, z.B. einen gewissen Abstand zueinander aufweisen.

Passiert ein Tropfen 4 die Elektrodenmatrix, so läßt sich im Falle, dass mindestens ein Kreuzungspunkt 6 (Zeile/Spalte) überstrichen wird, anhand der Änderung der elektrischen Parameter mit der Auswerteelektronik 7 eine elektronische Auswertung vornehmen. Ein fluidisch benetzter Kreuzungspunkt 6 wird sich bei einer elektronischen Abfrage anders verhalten, als die Masse der anderen nicht benetzten Kreuzungspunkte 6. Auf diese Weise läßt sich eine Funktionskontrolle der Mikropipette realisieren. Gleichzeitig läßt sich mit einem derartigen Sensor bestimmen, wie groß der X-Y-Offset der Mikropipette ist.

Eine Variante kann darin bestehen, zwei in definiertem Abstand zueinander befindliche Meßfelder 3, 3' auf einer Trägerstruktur 2 vorzusehen, die jeweils parallel zueinander ausgerichtete Elektroden 1 aufweisen, die jeweils unterschiedlich ausgerichtet sind. Auf einem Feld können die Elektroden senkrecht zur Messung der X-Position und auf dem anderen Feld waagerecht zur Messung der Y-Position ausgerichtet sein (Fig. 6). Die Positionsermittlung erfolgt hier durch getrennte Probenabgabe jeweils auf das X- und das Y-Meßfeld und getrennte elektronische Auswertung. Voraussetzung hierfür ist natürlich, daß die genaue Position der Pipette, die den tropfen 4 abgibt, bekannt ist.

Eine weitere Variante ein Meßfeld zu realisieren, besteht darin, konzentrisch verlaufende unterbrochene oder durchgehende Elektrodenringe vorzusehen. Die Bestimmung des Offsets erfolgt hier durch die Ermittlung der Richtung der Abweichung und deren Betrag in Bezug auf die Sensormitte (Fig. 7).

Es besteht auch die Möglichkeit, punktförmige an der Oberfläche liegende Elektroden mit zueinander isolierten Zuleitungen auf der Elektrodenseite, im Basismaterial und/oder auf der Rückseite des Sensors vorzusehen, wie dies z.B. schematisch aus Fig. 3 ersichtlich ist.

Das anwendbare Meßprinzip (kapazitiv, amperometrisch, konduktometrisch, potentiometrisch usw.) und eine geeignete Auswerteelektronik 7 erlauben eine ausreichend schnelle Abfrage sämtlicher Kreuzungspunkte 6 der Matrix (Fig. 5), bzw. der Segmente der Elektrodenringe (Fig. 7) oder der punktförmigen Elektrodenmatrix (Fig. 3).

Mit den beschriebenen Sensoren werden zwei Meßergebnisse erhalten, d.h. ob überhaupt ein Tropfen abgesetzt worden ist und wenn ja, an welchem Ort, d.h. es wird die Abweichung vom vorgesehenen Ablageort bestimmt, so daß die Meßergebnisse der X-Y-Robotik des Nanoplotters übergeben werden können.

Die Fläche des Sensors muß dazu größer sein, als der vorgesehene Ablageort.

Die Elektrodenmatrix oder die konzentrisch angeordneten Ringe werden auf eine planare Oberfläche der Trägerstruktur 2 aufgebracht, beispielsweise eine Glas- oder Siliziumbasisplatte. Die Leiterzüge können mittels der bekannten Mikro-Lithografie und Schichttechnik hergestellt werden. Die Zeilen und Spalten der Elektrodenmatrix werden durch gestandene anorganische Isolatoren isoliert. Die Kreuzungspunkte werden mit üblichen Trockenätzverfahren geöffnet.

Um die Dynamik zu verbessern, kann der Sensor auf eine bestimmte Arbeitstemperatur geregelt werden. Es werden dabei kristallisierende (z.B. salzhaltige kristallisierende Puffer) Fluide zu Arrays geplottet. Diese Fluide verschmutzen den Sensor schnell. Aus diesem Grund muß der Sensor nicht nur heizbar, sondern auch waschbar sein. Zur Vermeidung einer Korrosion werden zumindest die freiliegenden Leiterzüge bzw. die Elektroden 1 aus einem Edelmetall hergestellt.

Für Reinigungszwecke kann die Sensoroberfläche mit Perforationen versehen werden. Das Reinigen kann auch rein mechanisch durch Wasserauftrag und anschließendes Abtupfen erfolgen.

Um eine ausreichende Ortsauflösung zu erreichen, wird die Leiterzugbreite und der Abstand der Kreuzungspunkte in Korrelation mit der Tropfengeometrie gebracht.

Eine Reduzierung der Zeilen und Spalten ist möglich. Hierzu weist die Matrix einen Ortsgradienten auf, d.h. der Abstand der Kreuzungspunkte 6 wird von innen - dort über ein Stück konstant klein - nach außen größer. Die Matrix wird also von innen nach außen definiert ungenauer. Auf entsprechende Weise kann dieser Ortsgradient auch bei konzentrisch angeordneten Elektroden 1 oder auch bei der Punktmatrix realisiert werden.

Die vorstehend beschriebenen Sensoren werden in der Weise angewendet, dass vor jeder Tropfenablage mit dem Nanoplotter eine Probeablage auf dem Sensor vorgenommen wird. Dabei erfolgt einerseits eine Funktionskontrolle der Mikropipette und andererseits gleichzeitig die Ermittlung x- und y-Offsets der Mikropipette, der an die x-y-Robotik des Nanoplotters ubergeben wird. Auf diese Weise lassen sich so exaktere Arrays mit einer Ausbeute von 100% generieren, obwohl gelegentliche Aussetzer der Mikropipette nicht auszuschließen sind. Darüberhinaus besteht die Möglichkeit, die Ausmaße des Tropfens zu bestimmen.

### Bezugszeichenliste

- 1: Elektrode
- 2: Trägerstruktur
- 3, 3': Meßfeld
- 4: Testtropfen

- 6: Kreuzungspunkt
- 7: Auswerteelektronik

## Patentansprüche

1. Sensor zur Funktionskontrolle einer Mikropipette eines Nanoplotters zur Kontrolle der Tropfenabgabe der Mikropipette und/oder zur Bestimmung der exakten örtlichen Tropfenablage und/oder dessen Lageabweichungen vom vorgesehenen Ablageort und/oder zur Bestimmung des Ausmaßes eines Tropfens» **dadurch gekennzeichnet, dass** Elektroden (1) vorgesehen sind, die zur Aufnahme von mit der Mikropipette abgelegten oder abgeworfenen Testtropfen (4), wenigstens ein Messfeld (3, 3') bildend, auf einer Trägerstruktur (2) angeordnet sind, dass die Elektroden (1) in einem regelmäßigen Raster punkt-, linien- oder flächenförmig gestaltet und flächenmäßig elektrisch isoliert zueinander angeordnet sind, dass die Elektroden (1) auf wenigstens einem Meßfeld (3, 3') zur Auswertung des vom Testtropfen (4) ausgelösten elektrischen Signales mit einer Auswerteelektronik (7) verbunden sind.

2. Sensor nach Anspruch 1, **dadurch gekennzeichnet, dass** das Meßfeld (3) eine flächig angeordnete doppelte ineinandergeschobene Kammstruktur aus gegeneinander isolierten Metallleitbahnen als Elektroden (1) auf einer Trägerstruktur (2) aufweist, die jeweils mit der Auswerteelektronik (7) verbunden sind.

3. Sensor nach Anspruch 1, **dadurch gekennzeichnet, dass** als Meßfeld (3) konzentrisch zueinander angeordnete Elektroden (1) auf einer Trägerstruktur (2) vorgesehen sind, die jeweils voneinander elektrisch isoliert angeordnet und mit der Auswerteelektronik (7) verbunden sind.

4. Sensor nach Anspruch 1, **dadurch gekennzeichnet, dass** das Meßfeid (3) eine Matrix von linienförmigen Elektroden (1) in einer Vielzahl von Zeilen und Spalten aufweist, wobei die Elektroden (1) der Matrix an ihren Kreuzungspunkten (6) elektrisch voneinander isoliert sind und jeweils mit der Auswertechaltung (7) elektrisch verbunden sind.

5. Sensor nach Anspruch 4, **dadurch gekennzeichnet, dass** die Elektroden (1) in den Kreuzungspunkten (6) einen geringen Abstand zueinander aufweisen.

6. Sensor nach Anspruch 4 und 5, **dadurch gekennzeichnet, dass** die Matrix der Elektroden (1) einen Ortsgradienten aufweist, d.h. der Abstand der Kreuzungspunkte (6) wird von innen nach außen größer.

7. Sensor nach Anspruch 5, **dadurch gekennzeichnet, dass** der Abstand der Kreuzungspunkte (6). im zentralen Bereich des Meßfeldes (3) über einen vorgegebenen Bereich konstant klein ist.

8. Sensor nach Anspruch 1, **dadurch gekennzeichnet, dass** das Meßfeld (3) aus konzentrisch angeordneten unterbrochenen oder durchgehenden Elektrodenringen aus einem elektrisch leitfähigen Material besteht.

9. Sensor nach einem der Ansprüche 1 bis 8, **dadurch gekennzeichnet, dass** die Elektroden (1) im Meßfeld (3) aus einem Edelmetall oder aus einem zumindest auf der Oberfläche leitfähigen Kunststoff bestehen.

10. Sensor nach einem der Ansprüche 1 bis 9, **dadurch gekennzeichnet, dass** die Elektroden (1) auf eine planare oder gekrümmte bzw. gewölbte Oberfläche der Trägerstruktur (2) aufgebracht sind.

11. Sensor nach einem der Ansprüche 1 bis 10, **dadurch gekennzeichnet, dass** die planare Oberfläche eines Nichtleiters, z.B. einer Glasplatte, einer Siliziumplatte oder eines Kunststoffes die Basis als Trägerstruktur (2) bildet.

12. Sensor nach einem der Ansprüche 1 bis 11, **dadurch gekennzeichnet, dass** die Elektroden (1) mittels der bekannten Mikro-Lithografie und Schichttechnik hergestellt sind.

13. Sensor nach einem der Ansprüche 1 bis 12, **dadurch gekennzeichnet, dass** die Elektroden (1) durch gestandene Isolatoren voneinander isoliert sind.

14. Sensor nach Anspruch 4 oder 5, **dadurch gekennzeichnet, dass** die Kreuzungspunkte (6) mit Hilfe der üblicher Ätzverfahren, wie Trockenätzverfahren oder mit Hilfe eines Lasers geöffnet sind.

15. Sensor nach einem der Ansprüche 1 bis 14, **dadurch gekennzeichnet, dass** die Elektroden (1) heizbar sind.

16. Sensor nach Anspruch 1, **dadurch gekennzeichnet, dass** zwei in definiertem Abstand nebeneinander angeordnete Meßfelder (3, 3') vorgesehen sind, dass die Meßfelder (3, 3') jeweils parallel zueinander ausgerichtete langgestreckte Elektroden (1) aufweisen, dass die Elektroden (1) eines Meßfeldes (3; 3') eine andere Ausrichtung aufweisen, als die Elektroden (1) des jeweils anderen Meßfeldes (3, 3').

17. Sensor nach Anspruch 16, **dadurch gekennzeichnet, dass** die Elektroden (1) auf einem Meßfeld (3; 3') zur Messung der X-Position senkrecht und auf dem anderen Meßfeld (3; 3') zur Messung der Y-Position waagerecht ausgerichtet sind.

## Claims

1. Sensor for checking the function of a micro-pipette of a nano-plotter for the purpose of checking the release of drops by the micro-pipette and/or of determining the exact local placement of the drop and/or the deviation of its location from the specified placement location and/or for measuring the dimensions of a drop, **characterized in that** electrodes (1) are provided which have been arranged on a carrier structure (2), thus forming at least one measuring field (3, 3'), for receiving the test drops (4) dropped or placed by the micro-pipette, that the electrodes (1) are designed in the shape of a dot, a line or a field in a regular grid and arranged in such a way as to be spatially electrically insulated from each other, that the electrodes (1) on at least one measuring field (3, 3') are connected to electronic interpretation devices (7) for the purpose of evaluating the electric signal caused by the test drop (4).

2. Sensor according to Claim 1, **characterized in that** the measuring field (3) has a 2-dimensional, meshing double comb structure formed by metal conductor bodies as electrodes (1) on a carrier structure (2) which are each connected to the electronic interpretation devices (7).

3. Sensor according to Claim 1, **characterized in that** concentrically arranged electrodes (1) on a carrier structure (2) are provided as measuring field (3) which are each electrically insulated from each other and connected to the electronic interpretation devices (7).

4. Sensor according to Claim 1, **characterized in that** the measuring field (3) has a matrix of linear electrodes (1) arranged in a large number of lines and columns whereby the electrodes (1) of the matrix are electrically insulated from each other at their intersection points (6) and each is electrically connected to the interpretation circuit (7).

5. Sensor according to Claim 4, **characterized in that** the electrodes (1) are positioned at only a short distance from each other in the intersection points (6).

6. Sensor according to Claim 4 and 5, **characterized in that** the matrix of linear electrodes (1) shows a local gradient, i.e. the distance between the intersection points (6) increases from the centre to the edges.

7. Sensor according to Claim 5, **characterized in that** the distance between the intersection points (6) in the central area of the measuring field (3) remains constantly small within a specified area.

8. Sensor according to Claim 1, **characterized in that** the measuring field (3) consists of concentrically arranged interrupted or continuous electrode rings made of an electroconductive material.

9. Sensor according to any of Claims 1 to 8, **characterized in that** the electrodes (1) in the measuring field (3) consist of a precious metal or of a synthetic material which is conductive at least on its surface.

10. Sensor according to any of Claims 1 to 9, **characterized in that** the electrodes (1) have been applied onto a planar or curved or cambered surface of the carrier structure (2).

11. Sensor according to any of Claims 1 to 10, **characterized in that** the planar surface of a nonconductor, e.g. of a glass plate, a silicon plate or of a synthetic material constitute the basis as the carrier structure (2).

12. Sensor according to any of Claims 1 to 11, **characterized in that** the electrodes (1) have been manufactured using the known technique of microlithography and the layer technique.

13. Sensor according to any of Claims 1 to 12, **characterized in that** the electrodes (1) are insulated from each other by well-established insulators.

14. Sensor according to Claim 4 and 5, **characterized in that** the intersection points (6) have been opened by means of the usual etching methods such as dry etching methods or by means of a laser.

15. Sensor according to any of Claims 1 to 14, **characterized in that** the electrodes (1) are heatable.

16. Sensor according to Claim 1, **characterized in that** two measuring fields (3, 3') arranged next to each other at a specified distance are provided, that each of the measuring fields (3, 3') has long, parallel aligned electrodes, that the electrodes (1) of one measuring field (3, 3') are aligned in a direction different from that of the electrodes (1) of the respective other measuring field (3, 3').

17. Sensor according to Claim 16, **characterized in that** the electrodes (1) on one measuring field (3, 3') are aligned vertically for measuring the x position and horizontally on the other measuring field (3, 3') for measuring the y position.

## Revendications

1. Senseur pour le contrôle du fonctionnement d'une micropipette d'un nanoplotter pour le contrôle du passage des gouttes a travers la micropipette et/ou bien pour la détermination exacte du lieu où tombent ces gouttes et/ou bien pour de l'erreur de leur positionnement par rapport au lieu prévu et/ou bien pour la détermination des dimensions d'une goutte, caractérisé de sorte que d'électrodes (1) pour l'enregistrement des gouttes déposées ou laissées tomber par la micropipette (4) sont prévues placées sur une structure de support (2) et formant au moins un champ de mesure (3,3'), que les électrodes (1) sont ponctuellement ou linéairement ou superficiellement arrangées sur une grille régulière, et superficiellement isolées électriquement l'une de l'autre, que les électrodes (1) sont au moins sur un champ de mesure (3,3') reliées avec un appareil électronique d'interprétation (7) pour l'analyse du signal électrique déclenché par la goutte d'essai (4).

2. Senseur selon la revendication 1, caractérisé de sorte que le champ de mesure (3,3') a une structure plane en peigne double composée de conducteurs métalliques isolées l'un de l'autre comme électrodes (1) placées sur une structure de support (2), qui sont reliées avec l'appareil électronique d'interprétation (7).

3. Senseur selon la revendication 1, caractérisé de sorte que les électrodes (1) placées concentriquement sur une structure de support (2) comme champ de mesure (3) sont électriquement isolées l'une de l'autre et reliées a l'appareil électronique d'interprétation (7).

4. Senseur selon la revendication 1, caractérisé de sorte que le champ de mesure (3) a une matrice d'électrodes de forme linière (1) se trouvant dans un grand nombre de lignes et de colonnes, ce qui ces électrodes (1) de la matrice sont l'une de l'autre électriquement isolées a leurs points de rencontre (6), et chaque reliées électriquement au couplage d'interprétation (7).

5. Senseur selon la revendication 4, caractérisé de sorte que les électrodes (1) ont une petite distance entre elles a leurs points de rencontre (6).

6. Senseur selon la revendication 4 et 5, caractérisé de sorte que la matrice d'électrodes (1) a un gradient local, c'est a dire la distance entre les points de rencontre (6) devienne plus grande de l'intérieur vers l'extérieur.

7. Senseur selon la revendication 5, caractérisé de sorte que la distance entre les points de rencontre (6) dans le domaine central du champ de mesure (3) est constantment petit sur un domaine donne.

8. Senseur selon la revendication 1, caractérisé de sorte que le champ de mesure (3) se compose de bagues d'électrodes interrompus ou continus ordonnées de façon concentrique et faites d'un matériau conducteur d'électricité.

9. Senseur selon les revendications 1 a 8, caractérisé de sorte que les électrodes (1) au champ de mesure (3) sont faites d'un métal précieux ou bien d'une matière plastique conductrice d'électricité au moins sur sa couche superficielle.

10. Senseur selon les revendications 1 a 9, caractérisé de sorte que les électrodes (1) sont placées sur une surface plane ou bien courbe de la structure de support (2).

11. Senseur selon les revendications 1 a 10, caractérisé de sorte que la surface plane d'un non conducteur, par exemple une plaque en verre, une plaque en silicium ou bien d'une matière plastique compose la structure de support (2).

12. Senseur selon les revendications 1 a 11, caractérisé de sorte que les électrodes (1) sont fabriquées à l'aide de la micro-lithografie et de la technique revêtement connues.

13. Senseur selon les revendications 1 a 12, caractérisé de sorte que les électrodes (1) sont isolées l'une de l'autre par des isolateurs éprouvés.

14. Senseur selon la revendication 4 ou 5, caractérisé de sorte que les points de rencontre (6) sont ouverts à l'aide des méthodes de rongement habituelles comme la méthode de rongement a sec ou bien à l'aide d'un laser.

15. Senseur selon les revendications 1 a 14, caractérisé de sorte que les électrodes (1) sont chauffables.

16. Senseur selon la revendication 1, caractérisé de sorte que deux champs de mesure (3, 3') ayant une distance définie entre elles sont prévus, que les champs de mesure (3, 3') ont des électrodes longues (1) et parallèles, que les électrodes (1) d'un champ de mesure (3, 3') ont une juxtaposition différente de celles des électrodes (1) de l'autre champ de mesure (3, 3').

17. Senseur selon la revendication 16, caractérisé de sorte que les électrodes (1) sont placées verticalement dans un champ de mesure (3, 3') pour la mesure de la position x, et horizontalement dans un autre champ de mesure (3, 3') pour la mesure de la position y.
